**Europäisches Patentamt**

(19) **European Patent Office**

**Office européen des brevets**

(11) Veröffentlichungsnummer: **0 012 979**
**B1**

(12) **EUROPÄISCHE PATENTSCHRIFT**

(45) Veröffentlichungstag der Patentschrift:
23.03.83

(51) Int. Cl.³: **H 04 N 7/00, H 04 J 3/16, H 04 B 12/00**

(21) Anmeldenummer: **79105232.7**

(22) Anmeldetag: **17.12.79**

(54) Verfahren zur Übertragung mehrerer Signale über eine Lichtwellenleiterverbindung, insbesondere zwischen einer Zentrale und einem Teilnehmeranschluss.

(30) Priorität: **27.12.78 DE 2856217**
**28.05.79 DE 2921510**

(43) Veröffentlichungstag der Anmeldung:
**09.07.80 Patentblatt 80/14**

(45) Bekanntmachung des Hinweises auf die Patenterteilung:
**23.03.83 Patentblatt 83/12**

(84) Benannte Vertragsstaaten:
**AT BE CH DE FR GB IT LU NL SE**

(56) Entgegenhaltungen:
**EP-A-0 012 377**
**FR-A-1 541 878**
**GB-A-610 774**
**US-A-2 760 002**
**SIEMENS RESEARCH AND DEVELOPMENT REPORTS, Band 5, Nr. 4, April 1976, Seiten 194—202, Berlin, DE. W. HORAK: »Analog TV Signal Transmission over Multimode Optical Waveguides«**

(73) Patentinhaber: **SIEMENS AKTIENGESELLSCHAFT, Berlin und München Wittelsbacherplatz 2, D-8000 München 2 (DE)**

(72) Erfinder: **Christiansen, Hans-Martin, Dipl.-Ing., Minorstrasse 12a, D-8000 München 71 (DE)**

**THE INTERNATIONAL SYMPOSIUM ON SUBSCRIBER LOOPS AND SERVICES, 20.—24. März 1978, Seiten 44—48, Atlanta, Georgia; Conference Record 1978, IEEE J. J. COYNE et al.: »Integrated Broadband Distribution System for Low Density Rural Areas Using Optical Fiber Transmission«**

## Verfahren zur Übertragung mehrerer Signale über eine Lichtwellenleiterverbindung, insbesondere zwischen einer Zentrale und einem Teilnehmeranschluß

Die Erfindung betrifft Verfahren zur gemeinsamen Übertragung von Bild- und Tonsignalen über eine Lichtwellenleiterverbindung, insbesondere zwischen einer Zentrale und einem Teilnehmeranschluß, bei dem die zu übertragenden Bild- und Tonsignale in pulslagenmodulierte (PPM-)Signale umgeformt und diese nach der Zusammenfassung zu einem Zeitmultiplexsignal übertragen werden und dabei für die Übertragung von einer Zentrale zu einem Teilnehmeranschluß ein Zeitmultiplexsignal mit einem ersten Rahmenaufbau und für die Übertragung vom Teilnehmeranschluß zur Zentrale ein weiteres Zeitmultiplexsignal mit einem zum ersten unterschiedlichen Rahmenaufbau vorgesehen ist, daß außerdem das zum Teilnehmer übertragene Zeitmultiplexsignal mehrere Fernsehsignale jeweils einschließlich Ton, davon wahlweise ein Bildfernsprechsignal, eine Anzahl Mono-Tonprogrammsignale entsprechend der halben Anzahl an Stereotonsignalen und wenigstens ein digitales Fernsprechsignal enthält, und daß das vom Teilnehmer zur Zentrale übertragene Zeitmultiplexsignal ein Bildfernsprechsignal, ein Wählsignal für Fernsehprogramme, wenigstens ein digitales Fernsprechsignal und wahlweise einen Teilnehmer-Signalkanal enthält.

Mit den steigenden Anforderungen an die Empfangsqualität von Fernsehbildern und Stereotonsignalen steigt der Wunsch nach einer Zuführung dieser Programme zum Teilnehmer über Kabel. Der Einsatz derartiger Verteilnetze unter Verwendung von Koaxialkabeln ist jedoch recht aufwendig und teuer. Es gibt deshalb Vorstellungen, Fernsehverteilnetze mit Lichtwellenleiterverbindungen zwischen einzelnen Verteilzentralen bzw. Konzentratoren und zwischen der Verteilzentrale und dem Teilnehmeranschluß zu realisieren. Derartige Fernsehverteilnetze sollen dabei die Möglichkeit der Übertragung von vier Fernsehsignalen jeweils einschließlich dem zugehörigen Tonsignal, außerdem von 24 Stereosignalen bzw. 48 Mono-Tonprogrammsignalen und einem Fernsprechsignal, das wegen der Zukunftssicherheit möglichst in digitaler Form mit der genormten Bitrate von 64 kbit/s übertragen werden sollte, bieten. Außerdem sollte die Möglichkeit bestehen, anstelle eines der Fernsehsignale ein Bildfernsprechsignal zu übertragen. Im Hinblick auf die Möglichkeit der Übertragung weiterer Fernsehprogramme sollte ein Rückkanal vorgesehen sein, über den die Programmwünsche der jeweiligen Verteilzentrale mitgeteilt werden können, außerdem sollten im Rückkanal das vom Teilnehmer abgehende Bildfernsprechsignal und das entsprechende digitale Fernsprechsignal zur Zentrale übertragen werden.

Es ist bereits bekannt, einzelne Fernsehbilder über Lichtwellenleiter mittels frequenzmodulierter Signale zu übertragen. Im Hinblick auf die im vorliegenden Falle geforderte Übertragung mehrerer Signale wäre dann zunächst eine Zusammenfassung der zu übertragenden Signale mittels Frequenzmultiplexverfahren erforderlich, anschließend müßte das Frequenzmultiplexsignal für die Lichtwellenleiterübertragung frequenzmoduliert werden. Dieser letzte Schritt benötigt einen aufwendigen und außerdem schwierig zu realisierenden Frequenzmodulator mit großem Frequenzhub und äußerst linearer Kennlinie.

Aus den Siemens-Forschungs- und Entwicklungsberichten, Bd. 5, Nr. 4 vom April 1976, Seiten 194 bis 202, ist eine Anordnung zur Übertragung von analogen TV-Signalen über eine optische Wellenleitung bekannt. Die Bildsignale werden dabei in pulslagenmodulierte Signale umgeformt. Der Tonkanal wird dabei über dieselbe Lichtwellenleitung mittels eines frequenzmodulierten Trägers übertragen.

Aus der europäischen Patentanmeldung EP-A-123 377 ist ein System zur Übertragung von Signalen zwischen einer Fernsehkamera und der mit ihr über Lichtwellenleiter verbundenen Steuereinheit beschrieben. Bei diesem System werden einige Tonsignale und Verständigungssignale amplitudenmoduliert und mit je einem anderen Tonsignal frequenzmoduliert. Diese frequenzmodulierten Signale werden danach mit dem Videosignal zusammen pulsmoduliert und dieses pulsmodulierte Signalgemisch zur Modulation des Lichtes eines Lasers benutzt.

Mit der Breitbandübertragung von Fernsehsignalen und Tonprogrammen über optische Fasern beschäftigt sich auch die Veröffentlichung »The International Symposium on Subscriber Loops and Services«, 20. bis 24. 3. 1978, Seiten 44 bis 48. Mittels eines FM-Übertragungsverfahrens werden dabei Fernseh-, Daten- und Telefonsignale übertragen.

Aus der US-A-2 760 002 ist ein Übertragungssystem für pulsmodulierte Zeitmultiplexsignale bekannt. Es werden Telefon- bzw. Telegrafiesignale mittels Pulslagenmodulation über Kupferleitungen übertragen, ohne daß ein Hinweis auf die Übertragung von TV-Signalen bzw. von Lichtwellenleitern in der Veröffentlichung enthalten ist.

Weiterhin ist es aus der GB-A-610 774 und der FR-A-1 541 878 bekannt, Zeitmultiplexsignale in geeigneten Impulsrahmen zu übertragen. Zur Verringerung des Nebensprechens ist es dabei aus der GB-A-610 774 bekannt, jeden Abtastwert durch zwei gegenphasig pulslagenmodulierte Impulse zu übertragen.

Die Aufgabe der Erfindung besteht also darin, ein Verfahren der eingangs erwähnten Art zu finden, das vergleichsweise wenig aufwendig ist, außerdem soll der teilnehmerseitige Aufwand durch Verringerung der Zahl der Demodulatoren und durch Vereinfachung der Leitungsverlegung verringert werden.

Die Aufgabe wird erfindungsgemäß dadurch gelöst, daß eine einzelne Periode des zum Teilnehmeranschluß übertragenen pulslagenmodulierten Zeitmultiplexsignals mit einem gegenüber den anderen Impulsen erkennbar verbreiterten Taktimpulse beginnt, daß daran anschließend jeweils aufeinanderfolgend ein Impuls eines der vier Fernsehsignale einschließlich Ton und danach in 99 Unterperioden aufeinanderfolgend jeweils ein Impuls eines der vier Fernsehsignale und eines Unterkanals übertragen wird und daß in der ersten bis sechzehnten Unterperiode im Unterkanal die Signale des ersten bis achten Monotonsignals, in der siebzehnten Unterperiode ein Signal eines digitalen Fernsprechsignals in der 18. bis 49. Unterperiode die Signale der 9. bis 24. Monotonsignale, in der 50. Unterperiode ein weiteres Signal des digitalen Fernsprechsignals, in der 51. bis 82. Periode die Signale des 25. bis 40. Monotonsignals, in der 83. Unterperiode ein drittes Signal des digitalen Fernsprechsignals und in der 84. bis 99. Unterperiode die Signale des 41. bis 48 Monotonsignals übertragen werden.

Der besondere Vorteil des erfindungsgemäßen Verfahrens liegt darin, daß bei der Pulslagenmodulation einzelne Impulse kurzer Dauer übertragen werden, dies ist aber im Hinblick auf die Verwendung von Laserdioden als optische Sender besonders vorteilhaft.

Eine wesentliche Verbesserung des Signal-Geräusch-Verhältnisses eines Unterkanals ist durch eine Alternative zum vorstehend angeführten Verfahren möglich, die so ausgebildet ist, daß eine einzelne Periode des von der Zentrale zum Teilnehmer übertragenen pulslagenmodulierten Zeitmultiplexsignals jeweils 59 Unterperioden enthält und daß in jeder Unterperiode ein Impuls eines Unterkanals mit vergleichsweise großem Zeithub und sieben Gruppen aus jeweils vier Impulsen mit vergleichsweise kleinem Zeithub enthalten sind und durch jeden der vier Impulse eines der vier Fernsehsignale übertragen wird und die Impulse des Unterkanals periodisch zur Übertragung eines Taktsignals, von 48 Tonsignalen und von zehn Teilsignalen zur Übertragung eines digitalen Fernsprechsignals dienen, und daß dabei die einzelnen Impulse eine Dauer von 5 ns aufweisen und der Zeitaussteuerungsbereich für jeden Impuls des Unterkanals 100 ns und der Zeitaussteuerungsbereich für jeden Impuls der Fernsehsignale 10 ns beträgt.

Weitere zweckmäßige Ausbildungen des erfindungsgemäßen Verfahrens sind in den Patentansprüchen 3 bis 9 beschrieben.

Die Erfindung soll im folgenden anhand in der Zeichnung dargestellter Ausführungsbeispiele näher erläutert werden. In der Zeichnung zeigt

Fig. 1 den Rahmenaufbau eines von der Zentrale zum Teilnehmer übertragenen Zeitmultiplexsignals unter besonderer Berücksichtigung eines einfachen Multiplexer- und Demultiplexeraufbaus,

Fig. 2 den Rahmenaufbau eines von der Zentrale zum Teilnehmer übertragenen Zeitmultiplexsignals mit einem verbesserten Signal-Geräusch-Verhältnis der übertragenen Tonsignale und

Fig. 3 eine Anordnung zur Durchführung des erfindungsgemäßen Verfahrens.

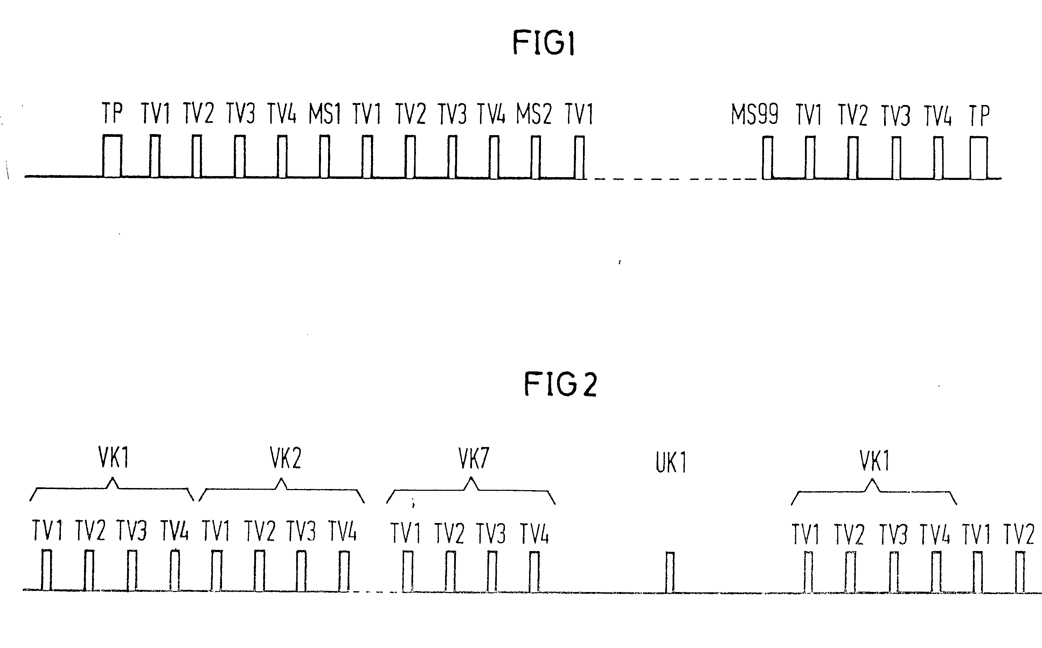

Der in der Fig. 1 gezeigte Rahmenaufbau eines Zeitmultiplexsignals beginnt mit einem Taktimpuls TP, der zur leichteren Erkennbarkeit gegenüber den nachfolgenden Impulsen wesentlich verbreitert ist. Diese Verbreiterung wird dadurch ermöglicht, daß der Taktpuls keine Information trägt und deshalb bei der Pulslagenmodulation nicht innerhalb des vorgesehenen Zeitfensters verschoben wird. An den Taktimpuls schließen sich im Zeitraster von jeweils 15 ns pulslagenmodulierte Impulse TV1, TV2, TV3 an, die jeweils zur Übertragung des ersten, zweiten oder dritten Fernsehsignals oder zur Übertragung des Bildfernsprechsignals an der mit TV4 bezeichneten Stelle dienen. Anstelle des Bildfernsprechsignals kann ein viertes Fernsehsignal übertragen werden. Der anschließend übertragene Impuls MS1 für den ersten Impuls eines Unterkanals und die aufeinanderfolgenden vier Impulse TV1 ... TV4 der Fernsehsignale bilden eine Unterperiode, die sich innerhalb des gesamten Rahmens 99mal wiederholt.

Dabei wird durch den Impuls MS1 bis zum Impuls MS16 das erste bis achte Monotonsignal entsprechend dem ersten bis vierten Stereotonsignal übertragen. Jedes Signal wird dabei durch zwei gegenphasig pulslagenmodulierte Impulse übertragen. Als Impuls MS17 des Unterkanals wird ein erstes Signal des digitalen Fernsprechsignals mit der Bitrate von 64 kbit/s übertragen. Die Impulse MS18 bis MS49 dienen zur Übertragung der Monotonprogramme 9 bis 24 entsprechend den Stereotonprogrammen 5 bis 12. Der Impuls MS50 dient wiederum zur Übertragung des Signals des digitalen Fernsprechsignals, während die anschließenden Impulse MS51 bis MS82 zur Übertragung der Monotonprogramme 25 bis 40 entsprechend den Stereotonprogrammen 13 bis 20 dienen. Der Impuls MS83 dient zur weiteren Übertragung des digitalen Fernsprechsignals, während der Impuls MS84 bis zum Impuls MS99 zur Übertragung des 41. bis 48. Monotonprogramms entsprechend dem 21. bis 24. Stereotonsignals dient.

Auf Grund dieser Rahmenanordnung ergibt sich eine Impulsfolge in jedem Fernsehkanal von 13,29 MHz, während jedes Monotonprogramm bei einer Bandbreite von 15 kHz mit 132,9 kHz abgetastet wird. Das digitale Fernsprechsignal mit einer Bitrate von 64 kbit/s wird mit pulslagenmodulierten Impulsen mit einer Rate von 398,7 kHz übertragen, so daß der Aufwand für die Beseitigung von Jitterstörungen noch klein ist. Die Impulsrate des gesamten pulslagenmodulierten Zeitmultiplexsignals ist dabei 66,45 MHz entsprechend einem Impulsabstand von 15 ns. Bei einer Impulsdauer von 5 ns am Empfänger verbleibt ein ausnützbarer Zeitaussteuerungsbereich von 10 ns. Hieraus ergibt sich bei den derzeit realisierbaren mittleren Sendeleistungen von Laserdioden und bei der Dämpfung des verwendeten Lichtwellenleiters ein ausreichender Geräuschsignalabstand in den einzelnen Fernsehkanälen. Auch für die übertragenen Tonsignale in Mono- bzw. in Stereotechnik ergibt sich ein ausreichender Signal-Geräusch-Abstand.

Bei der Übertragung von Sendersignalen für den UKW-Rundfunk wird jedoch für Monosignale ein Signal-Geräusch-Abstand von 71 dB gefordert. Dies geschieht im Hinblick auf die Übertragung der Stereoinformation mittels Hilfsträgers bei UKW-Rundfunk. In der Fig. 2 wird deshalb im Hinblick auf eine weitere Verbesserung des Signal-Geräusch-Abstandes für die übertragenen Tonsignale anstelle des gleichmäßigen Rahmenaufbaus nach der Fig. 1 ein ungleichmäßiger Rahmenaufbau gewählt, bei dem die zur Übertragung der Tonsignale dienenden Impulse in einem wesentlich größe-ren Zeitbereich pulslagenmoduliert werden kön-nen. Während bei der Fig. 1 der Zeitaussteuerungsbereich für jeden dieser Impulse 10 ns beträgt, wurde dieser Wert bei dem Rahmenaufbau nach der Fig. 2 nur für die Fernsehsignale aufrechterhalten, während den die Tonsignale übertragenden Impulsen ein maximaler Zeitaussteuerungsbereich von 100 ns zur Verfügung steht. Das Zeitmultiplexsignal nach der Fig. 2 enthält zunächst in sieben unmittelbar aufeinanderfolgenden Abtastperioden VK1 ... VK7 jeweils vier pulslagenmodulierte Impulse TV1 ... TV4 zur Übertragung der Fernsehbilder bzw. anstelle des vierten Fernsehkanals zur Übertragung eines Bildfernsprechkanals. An diese sieben Abtastperioden für die · TV-Kanäle schließt sich die Übertragung eines pulslagenmodulierten Impulses für den Unterkanal an. Der Unterkanal umfaßt dabei 59 Impulse, so daß nach 59 derartigen Subperioden ein Impulsrahmen übertragen ist. Der erste Impuls des Unterkanals dient dabei als Taktimpuls, dieser Impuls kann zur leichteren Erkennbarkeit auch als Mehrfachimpuls übertragen werden. Die weiteren Impulse des Unterkanals dienen zur Übertragung der Tonsignale und des digitalen Fernsprechsignals mit der Bitrate von 64 kbit/s. Die Übertragung dieser Signale ist in ähnlicher Weise wie beim Pulsrahmen nach der Fig. 1 ineinandergeschachtelt. Bei diesem Impulsrahmen ergibt sich durch den vergrößerten Zeitaussteuerungsbereich für die Impulse des Unterkanals eine Verbesserung für die mit diesem Kanal übertragenen Signale hinsichtlich des Signal-Geräusch-Verhältnisses von 20 dB. Diese Verbesserung wird aber dadurch erkauft, daß im Hinblick auf die ungleichmäßigere Abtastung der Fernsehsignale gegebenenfalls eine Zwischenspeicherung dieser Signale notwendig wird.

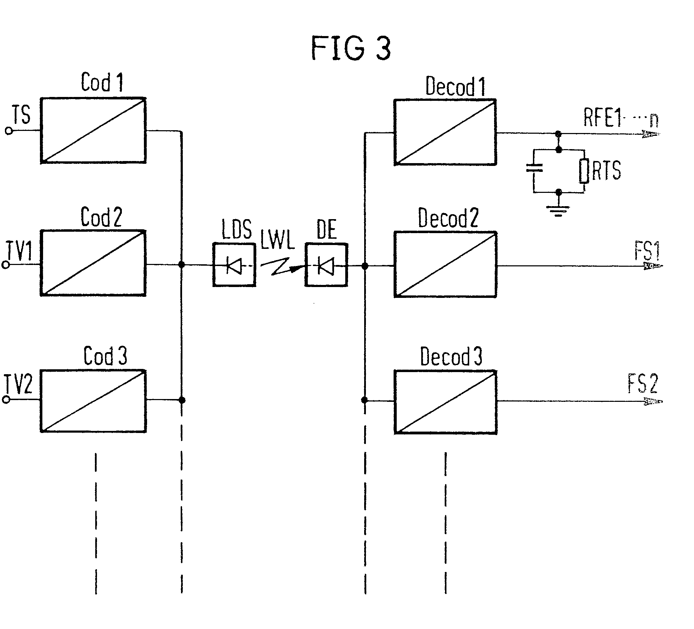

Die Anordnung nach der Fig. 3 enthält sendeseitig eine Reihe von Codierern Cod1, 2, 3, die zur Umwandlung der Eingangssignale in pulslagenmodulierte Signale (PPM-)Signale dienen. Dem ersten Codierer Cod1 wird zu diesem Zweck ein Frequenzmultiplexsignal mit der Bandbreite 0 bis 6,6 MHz zugeführt, das auf 22 Hörrundfunkkanälen oder aus 21 Hörrundfunkkanälen und drei digitalen Fernsprechkanälen bestehen kann. Zur leichteren empfangsseitigen Trennung der einzelnen Hörrundfunkkanäle und zur störsicheren Übertragung kann auch von einem größeren Kanalraster, beispielsweise von 600 kHz, Gebrauch gemacht werden, so daß sich die Zahl der zu übertragenden Hörrundfunkkanäle halbiert. Im Codierer Cod1 wird dieses Frequenzmultiplexsignal TS mit einer Frequenz von 13,29 MHz abgetastet, wobei diese Abtastfrequenz für alle drei Codierer Cod1, 2, 3 gemeinsam ist und von einem in der Zeichnung nicht dargestellten Generator erzeugt wird.

Das erzeugte Zeitmultiplexsignal wird mittels der im Laserdiodensender LDS enthaltenen Laserdiode an die Lichtwellenleiterstrecke LWL abgegeben und von der im Empfänger DE enthaltenen Fotodiode in das elektrische Zeitmultiplexsignal zurückverwandelt und auf die einzelnen Empfängerkanäle aufgeteilt. Im ersten Decoder DECOD1 erfolgt eine Rückumwandlung des pulslagenmodulierten Signals in ein pulsamplitudenmoduliertes Signal, während in den weiteren Decodern DECOD2, 3 die entsprechenden pulslagenmodulierten Signale direkt in die Fernsehsignale umgewandelt und den Fernsehempfängern Fs1, 2 zugeführt werden.

Bei der Umwandlung der Tonsignale von pulslagenmodulierten in pulsamplitudenmodulierte Signale kann dabei in vorteilhafter Weise von der Möglichkeit Gebrauch gemacht werden, empfangsseitig das Frequenzmultiplexsignal mit den beispielsweise 22 Hörrundfunksignalen in einer frequenzmäßig höheren Lage wiederzugeben. Die frequenzmäßige Verschiebung kann dabei um das Vielfache der sendeseitig verwendeten Abtastfrequenz von 13,29 MHz erfolgen, so daß auch eine Erzeugung bei der 7. Harmonischen der Abtastfrequenz erfolgen kann. In diesem Falle ergibt sich empfangsseitig ein Frequenzband von 93,03 bis 99,63 MHz, so daß in diesem Falle die 22 Hörrundfunkkanäle in den UKW-Rundfunkbereich fallen. Durch einen mit dem Ausgang des Decoders DECOD1 verbunden und auf die Mittel dieses Frequenzbandes abgestimmten Schwingkreises RTS ist es dann möglich, nicht nur die unerwünschten weiteren Seitenbänder zu unterdrücken, sondern auch durch Resonanztransfer nahezu die gesamte Energie des pulsamplitudenmodulierten Signals in dieses Frequenzband umzusetzen. Dadurch ergibt sich eine wesentliche Verbesserung des Signalgeräuschverhältnisses, die bei geringen Kabellängen zum Rundfunkempfänger eine weitere Verstärkung unnötig erscheinen läßt.

Wird in dem untersten Kanal des Frequenzmultiplexsignals auf die Übertragung eines Tonprogrammsignals verzichtet, dann können in diesem Signal bis zu drei digitale Fernsprechsignale übertragen werden. Pro Fernsprechsignal steht dann eine Bitrate von 72 kbit zur Verfügung, so daß zusätzlich zu dem digitalen Fernsprechsignal von 64 kbit/s auch eine Übertragungsmöglichkeit für die benötigten Synchronisationssignale besteht. Bei Verwendung des untersten Kanals des Frequenzmultiplexsignals, der im Frequenzbereich von 0 bis 300 kHz liegt, erscheint die Kombination der digitalen Fernsprechsignale unmittelbar als Gleichstromimpulsfolge, die über einen Tiefpaß mit einer Grenzfrequenz von 300 kHz abgetrennt werden kann und anschließend den einzelnen Fernsprechgeräten zugeführt wird.

**Patentansprüche**

1. Verfahren zur gemeinsamen Übertragung von Bild- und Tonsignalen über eine Lichtwellenleiterverbindung, insbesondere zwischen einer Zentrale und einem Teilnehmeranschluß, bei dem die zu übertragenden Bild- und Tonsignale in pulslagenmodulierte (PPM-)Signale umgeformt und diese nach der Zusammenfassung zu einem Zeitmultiplexsignal übertragen werden und dabei für die Übertragung von einer Zentrale zu einem Teilnehmeranschluß ein Zeitmultiplexsignal mit einem ersten Rahmenaufbau und für die Übertragung vom Teilnehmeranschluß zur Zentrale ein weiteres Zeitmultiplexsignal mit einem zum ersten unterschiedlichen Rahmenaufbau vorgesehen ist, daß außerdem das zum Teilnehmer übertragene Zeitmultiplexsignal mehrere Fernsehsignale jeweils einschließlich Ton (TV1, TV2, TV3, TV4), davon wahlweise ein Bildfernsprechsignal, eine Anzahl Mono-Tonprogrammsignale entsprechend der halben Anzahl an Stereotonsignalen und wenigstens ein digitales Fernsprechsignal enthält, und daß das vom Teilnehmer zur Zentrale übertragene Zeitmultiplexsignal ein Bildfernsprechsignal, ein Wählsignal für Fernsehprogramme, wenigstens ein digitales Fernsprechsignal und wahlweise einen Teilnehmer-Signalkanal enthält, dadurch gekennzeichnet, daß eine einzelne Periode des zum Teilnehmeranschluß übertragenen pulslagenmodulierten Zeitmultiplexsignals mit einem gegenüber den anderen Impulsen erkennbar verbreiterten Taktimpuls (TP) beginnt, daß daran anschließend jeweils aufeinanderfolgend ein Impuls eines der vier Fernsehsignale (TV1, TV2, TV3, TV4) einschließlich Ton und danach in 99 Unterperioden aufeinanderfolgend jeweils ein Impuls eines der vier Fernsehsignale und eines Unterkanals übertragen wird und daß in der ersten bis sechzehnten Unterperiode im Unterkanal die Signale des ersten bis achten Monotonsignals, in der siebzehnten Unterperiode ein Signal eines digitalen Fernsprechsignals in der 18. bis 49. Unterperiode die Signale der 9. bis 24. Monotonsignale, in der 50. Unterperiode ein weiteres Signal des digitalen Fernsprechsignals, in der 51. bis 82. Periode die Signale des 25. bis 40. Monotonsignals, in der 83. Unterperiode ein drittes Signal des digitalen Fernsprechsignals und in der 84. bis 99. Unterperiode die Signale des 41. bis 48. Monotonsignals übertragen werden.

2. Verfahren zur gemeinsamen Übertragung von Bild- und Tonsignalen über eine Lichtwellenleiterverbindung, insbesondere zwischen einer Zentrale und einem Teilnehmeranschluß, bei dem die zu übertragenden Bild- und Tonsignale in pulslagenmodulierte (PPM-)Signale umgeformt und diese nach der Zusammenfassung zu einem Zeitmultiplexsignal übertragen werden und dabei für die Übertragung von einer Zentrale zu einem Teilnehmeranschluß ein Zeitmultiplexsignal mit einem ersten Rahmenaufbau und für die Übertragung vom Teilnehmeranschluß zur Zentrale ein weiteres Zeitmultiplexsignal mit einem zum ersten unterschiedlichen Rahmenaufbau vorgesehen ist, daß außerdem das zum Teilnehmer übertragene Zeitmultiplexsignal mehrere Fernsehsignale jeweils einschließlich Ton (TV1, TV2, TV3, TV4), davon wahlweise ein Bildfernsprechsignal, eine Anzahl Mono-Tonprogrammsignale entsprechend der halben Anzahl an Stereotonsignalen und wenigstens ein digitales Fernsprechsignal enthält, und daß das vom Teilnehmer zur Zentrale übertragene Zeitmultiplexsignal ein Bildfernsprechsignal, ein Wählsignal für Fernsehprogramme, wenigstens ein digitales Fernsprechsignal und wahlweise einen Teilnehmer-Signalkanal enthält, dadurch gekennzeichnet, daß eine einzelne Periode des von der Zentrale zum Teilnehmer übertragenen pulslagenmodulierten Zeitmultiplexsignals jeweils 59 Unterperioden enthält und daß in jeder Unterperiode ein Impuls (UK1) eines Unterkanals mit vergleichsweise großem Zeithub und sieben Gruppen (VK1 ... VK7) aus jeweils vier Impulsen (TV1 ... TV4) mit vergleichsweise kleinem Zeithub enthalten sind und durch jeden der vier Impulse eines der vier Fernsehsignale übertragen wird und die Impulse des Unterkanals periodisch zur Übertragung eines Taktsignals, von 48 Tonsignalen und von zehn Teilsignalen zur Übertragung eines digitalen Fernsprechsignals dienen, und daß dabei die einzelnen Impulse eine Dauer von 5 ns aufweisen und der Zeitaussteuerungsbereich für jeden Impuls des Unterkanals 100 ns und der Zeitaussteuerungsbereich für jeden Impuls der Fernsehsignale 10 ns beträgt.

3. Verfahren nach Patentanspruch 1 oder 2, dadurch gekennzeichnet, daß das digitale Fernsprechsignal als NRZ-Signal einer Pulslagenmodulation unterworfen wird und dadurch die Nullwerte des NRZ-Signals pulslagenmodulierte Impulse mit einer maximal voreilenden oder nacheilenden Phase und die Einswerte des NRZ-Signals pulslagenmodulierte Impulse mit einer maximal nacheilenden oder voreilenden Phase ergeben.

4. Verfahren nach Patentanspruch 1 oder 2, dadurch gekennzeichnet, daß die Tonprogrammsignale nach den Hörrundfunknormen für UKW-Rundfunk mit Stereohilfsträger und Frequenzmodulation zu einem Frequenzmultiplexsignal zusammengefaßt werden, dieses sendeseitig in ein pulslagenmoduliertes Signal umgeformt wird und empfangsseitig dieses pulslagenmodulierte Signal in ein pulsamplitudenmoduliertes Signal mit einem im Rundfunk-UKW-Bereich liegenden Energieband umgesetzt wird.

5. Verfahren nach Patentanspruch 4, dadurch gekennzeichnet, daß das Frequenzmultiplexsignal ein Frequenzraster von 300 kHz oder dessen Vielfachen enthält.

6. Verfahren nach Patentanspruch 4 oder 5, dadurch gekennzeichnet, daß 22 Tonprogrammsignale zu einem Frequenzmultiplexsignal mit einer Frequenz von 0 bis 6,6 MHz zusammengefaßt werden, dieses durch Abtastung mit einer Frequenz von 13,29 MHz in ein pulslagenmoduliertes Signal umgeformt wird und empfangsseitig das pulslagenmodulierte Signal in ein pulsamplitudenmoduliertes Signal mit einem im UKW-Rundfunkbereich liegenden Seitenband umgesetzt wird.

7. Verfahren nach Patentanspruch 6, dadurch gekennzeichnet, daß das empfangsseitig erzeugte pulsamplitudenmodulierte Signal dadurch verstärkt wird, daß durch Resonanztransfer mittels eines auf die Bandmitte dieses Signal abgestimmten Schwingkreises unerwünschte weitere Seitenbänder unterdrückt und nahezu die gesamte Energie des pulsamplitudenmodulierten Signals in das gewünschte UKW-Band umgesetzt wird.

8. Verfahren nach Patentansprüchen 4 bis 6, dadurch gekennzeichnet, daß im frequenzmäßig niedrigsten Kanal des sendeseitig erzeugten Frequenzmultiplexsignals mit einer Frequenz zwischen 0 und 300 kHz drei digitale Fernsprechsignale übertragen werden.

9. Verfahren nach Patentansprüchen 4 bis 6, dadurch gekennzeichnet, daß das empfangsseitig pulsamplitudenmodulierte Signal im Frequenzbereich von 93,03 bis 99,63 MHz erzeugt wird.

10. Verfahren nach Patentanspruch 4 bis 6, dadurch gekennzeichnet, daß empfangsseitig das pulsamplitudenmodulierte Signal im Frequenzbereich von 99,72 bis 106,32 MHz erzeugt wird.

## Claims

1. Process for the combined transmission of video signals and sound signals via a light waveguide link, in particular between a central unit and a subscriber terminal, wherein the video signal and sound signals which are to be transmitted are converted into pulse-position-modulated (PPM) signals which are transmitted having been combined to form a t.d.m. signal where a t.d.m. signal which possesses a first frame structure is provided for the transmission from a central unit to a subscriber terminal, and a further t.d.m. signal which possesses a frame structure which differs from the first frame structure is provided for transmission from the subscriber terminal to the central unit, that moreover the t.d.m. signal which is transmitted to the subscriber includes a plurality of television signals each including sound (TV1, TV2, TV3, TV4) which may selectively comprise a video telephone signal, a number of mono-sound programme signals corresponding to half the number for stereo-sound signals and at least one digital telephone signal, and that the t.d.m. signal transmitted from the subscriber to the central unit contains a video telephone signal, a selection signal for television programmes, at least one digital telephone signal and optionally a subscriber signalling channel, characterised in that one single period of the PPM t.d.m. signal transmitted to the subscriber terminal commences with a clock pulse (TP) which is recognisably wider than the other pulses, that thereafter in succession one pulse of one of the four television signals (TV1, TV2, TV3, TV4) including sound and then in 99 sub-periods in succession one pulse of one of the four television signals and one subsidiary channel are transmitted, and that in the first to sixteenth sub-period in the subsidiary channel the signals of the first to eighth mono-sound signal are transmitted, in the seventeenth sub-period a signal of a digital telephone signal is transmitted, in the eighteenth to forty-ninth sub-periods the signals of the ninth to twenty-fourth mono-sound signals are transmitted, in the fiftieth sub-period a further signal of the digital telephone signal is transmitted, in the fifty-first to eighty-second periods the signals of the twenty-fifth to fortieth mono-sound signal are transmitted, in the eighty-third sub-period a third signal of the digital telephone signal is transmitted, and in the eighty-fourth to ninety-ninth sub-periods the signals of the forty-first to forty-eighth mono-sound signal are transmitted.

2. Process for the combined transmission of video signals and sound signals via a light waveguide link, in particular between a central unit and a subscriber terminal, wherein the video signals and sound signals which are to be transmitted are converted into PPM signals which are transmitted having been combined to form a t.d.m. signal and where a t.d.m. signal which possesses a first frame structure is provided for the transmission from a central unit to a subscriber terminal, and a further t.d.m. signal which possesses a frame structure which differs from the former frame structure is provided for the transmission from the subscriber terminal to the central unit, that moreover the t.d.m. signal which is transmitted to the subscriber contains a plurality of television signals each including sound (TV1, TV2, TV3, TV4) which includes selectively a video telephones signal, a number of mono-sound programme signals corresponding to half the number for stereo-sound signals, and at least one digital telephone signal, and that the t.d.m. signal transmitted from the subscriber to the central unit contains a video telephone signal, a selection signal for television programmes at least one digital telephone signal and optionally a subscriber signal channel, characterised in that one single period of the PPM t.d.m. signal transmitted from the central unit to the subscriber contains 59 sub-periods and that each sub-period contains one pulse (UK1) of a sub-channel having a comparatively large time length and seven groups (VK1 ... VK7) each composed of four pulses (TV1 ... TV4) which possess a comparatively small time length and that one of the four television signals is transmitted by each of the four pulses and the pulses of the sub-channel serve periodically to transmit one clock signal of forty-eight sound signals and ten sub-signals for the transmission of a digital telephone signal, and that here the individual pulses have a duration of 5 ns and the time control zone for each pulse of the sub-channel amounts to 100 ns and the time control zone for each pulse of the television signals amounts to 10 ns.

3. Process as claimed in claim 1 or 2 characterised in that the digital telephone signal is subjected, as NRZ signal, to pulse position modulation (PPM) whereby the zero values of the NRZ signal produce PPM pulses having a maximum leading or lagging phase and the one values of the NRZ signal produce PPM pulses having a maximum lagging or leading phase.

4. Process as claimed in claim 1 or 2, characterised in that the sound programme signals are combined in accordance with the audio broadcasting standards for UKW broadcasting featuring stereo-auxiliary carriers and frequency modulation to form a frequency multiplex signal which is converted at the transmitting end into a PPM signal and at the receiving end this PPM signal is converted into a PAM (pulse-amplitude-modulated) signal whose energy band lies within the broadcasting UKW range.

5. Process as claimed in claim 4, characterised in that the frequency multiplex signal contains a frequency allocation scheme of 300 kHz or a multiple thereof.

6. Process as claimed in claim 4 or 5, characterised in that 22 sound programme signals are combined to form a frequency multiplex signal with a frequency of 0 to 6.6 MHz which is converted by scanning at a frequency of 13.29 MHz into a PPM signal and at the receiving end the PPM signal is converted into a PAM signal with a side band located within the UKW broadcasting range.

7. Process as claimed in claim 6, characterised in that the PAM signal generated at the receiving end is amplified in that undesired further side bands are suppressed by resonance transfer by means of an oscillating circuit tuned to the band centre of this signal and virtually the entire energy of the PAM signal is converted into the desired UKW band.

8. Process as claimed in claims 4 to 6, characterised in that three digital telephone signals are transmitted in the lowest frequency channel of the frequency multiplex signal generated at the transmitting end with a frequency between 0 and 300 kHz.

9. Process as claimed in claims 4 to 6, characterised in that the signal which has been pulse-amplitude-modulated at the receiving end is generated in the frequency range from 93,03 to 99.63 MHz.

10. Process as claimed in claims 4 to 6, characterised in that at the receiving end the PAM signal is generated in the frequency range from 99.72 to 106.32 MHz.

**Revendications**

1. Procédé pour la transmission commune de signaux d'image et audio par l'intermédiaire d'une liaison par guide d'ondes de lumière, notamment entre un central et un poste d'abonné, dans lequel les signaux d'image et audio à transmettre sont convertis en signaux modulés par position d'impulsion (PPM) et ceux-ci sont transmis après réunion en un signal multiplexé par répartition dans le temps, et, ce faisant, un signal multiplexé par répartition dans le temps est muni d'une première structure de trame pour la transmission d'un central à un poste d'abonné et un autre signal multiplexé par répartition dans le temps est muni d'une structure de trame différente de la première pour la transmission du poste d'abonné au central, qu'en outre le signal multiplexé par répartition dans le temps transmis à l'abonné contient plusieurs signaux de télévision comprenant respectivement le son, par ce fait au choix un signal de vidéophonie, a un nombre de signaux de programme audiomonophoniques correspondant au nombre moitié en signaux stéréophoniques et au moins un signal téléphonique numérique, et que le signal multiplexé par répartition dans le temps transmis de l'abonné au central contient un signal de vidéophonie, un signal de sélection pour des programmes de télévision, au moins un signal téléphonique numérique et au choix un canal de signaux d'abonné, caractérisé par le fait qu'une période individuelle du signal multiplexé par répartition dans le temps modulé par position d'impulsion transmis au poste d'abonné commence par une impulsion de cadence (TP) élargie de façon identifiable par rapport aux autres impulsions, qu'à la suite est transmise respectivement et successivement une impulsion d'un des quatre signaux de télévision (TV1, TV2, TV3, TV4) y compris le son et ensuite, dans 99 sous-périodes est transmise, successivement et respectivement, une impulsion dans les quatre signaux de télévision et d'un sous-canal, et que dans le sous-canal, dans la première à la seizième sous-périodes sont transmis les signaux du premier au huitième signal audio-monotonique, dans la dix-septième sous-période est transmis un signal d'un signal téléphonique numérique, dans la 18ème à la 49ème sous-périodes sont transmis les signaux du 9ème au 24ème signal audio-monotonique, dans la 50ème sous-période est transmis un autre signal du signal téléphonique numérique, dans la 51ème à la 82ème périodes sont transmis les signaux du 25ème au 40ème signal monotonique, dans la 83ème sous-période est transmis un troisième signal du signal téléphonique numérique et dans la 84ème à la 99ème sous-périodes sont transmis les signaux du 41ème au 48ème signal audio-monotonique.

2. Procédé pour la transmission commune de signaux d'image et audio par l'intermédiaire d'une liaison par guide d'ondes de lumière, notamment entre un central et un poste d'abonné, dans lequel les signaux d'image et audio à transmettre sont convertis en signaux modulés par position d'impulsion (PPM) et ceux-ci sont transmis après réunion en un signal multiplexé par répartition dans le temps, et, ce faisant, un signal multiplexé par répartition dans le temps est muni d'une première structure de trame pour la transmission d'un central à un poste d'abonné et un autre signal multiplexé par répartition dans le temps est muni d'une structure de trame différente de la première pour la transmission du poste d'abonné au central, qu'en outre le signal multiplexé par répartition dans le temps transmis à l'abonné contient plusieurs signaux de télévision comprenant respectivement le son, par ce fait au choix un signal de vidéophonie, a un nombre de signaux de programme audio-monophoniques correspondant au nombre moitié en signaux stéréophoniques et au moins un signal téléphonique numérique, et que le signal multiplexé par répartition dans le temps transmis de l'abonné au central contient un signal de vidéophonie, un signal de sélection pour des programmes de télévision, au moins un signal téléphonique numérique et au choix un canal de signaux d'abonné, caractérisé par le fait qu'une période individuelle du signal multiplexé par répartition dans le temps, modulé par position d'impulsion et transmis par le central au poste d'abonné, comporte 59 sous-périodes et que dans chaque sous-période sont contenus une impulsion (UK1) d'un canal à excursion temporelle relativement importante et sept groupes (VK1 ... VK7) de chacun quatre impulsions (TV1 ... TV4) d'excursion temporelle comparativement faible, et que par chacune de ces quatre impulsions est transmis l'un des quatre signaux de télévision alors que les impulsions du sous-canal servent périodiquement à la transmission d'un signal de cadence, de 48 signaux audio et de dix signaux partiels pour la transmission d'un signal téléphonique numérique, et que, ce faisant, les différentes impulsions qui possèdent une durée de 5 ns alors que la plage temporelle de contrôle pour chaque impulsion du sous-canal est de 100 ns et que la plage temporelle de contrôle pour chaque impulsion des signaux télévision est de 10 ns.

3. Procédé selon la revendication 1 ou 2, caractérisé par le fait que le signal téléphonique numérique est soumis, en tant que signal d'enregistrement non-retour à zéro, à une modulation par position d'impulsion, et que ce de fait des valeurs nulles du signal d'enregistrement non-retour à zéro donnent des impulsions modulées par position d'impulsion avec une phase maximale en avance ou en retard alors que les valeurs un du signal d'enregistrement non-retour à zéro dans des impulsions modulées par position d'impulsion avec une phase maximale en retard ou en avance.

4. Procédé selon la revendication 1 ou 2, caractérisé par le fait que les signaux de programme audio sont assemblés suivant les normes de radiodiffusion pour la radiodiffusion par ondes métriques avec porteuses auxiliaires stéréo et modulation en fréquence, en un signal multiplexé en fréquence, celui-ci étant transformé, du côté émission, en un signal modulé par position d'impulsion alors que du côté réception ce signal modulé par position d'impulsion est transformé en un signal modulé en amplitude d'impulsion avec une bande d'énergie qui se situe dans la plage radiophonique à ondes métriques.

5. Procédé selon la revendication 4, caractérisé par le fait que le signal multiplexé en fréquence comporte une trame de fréquences de 300 kHz ou un multiple de ce dernier.

6. Procédé selon la revendication 4 ou 5, caractérisé par le fait que 22 signaux de programme audio sont rassemblés en un signal multiplexé en fréquence d'une fréquence de 0 à 6,6 MHz, ce dernier est transformé par balayage avec une fréquence de 13,29 MHz en un signal modulé par position d'impulsion et, du côté réception, le signal modulé en position d'impulsion est transformé en un signal modulé en amplitude d'impulsion avec une bande latérale qui se situe dans la plage de radiodiffusion par ondes métriques.

7. Procédé selon la revendication 6, caractérisé par le fait que le signal modulé en amplitude d'impulsions, produit du côté réception, est amplifié en supprimant par un transfert de résonance à l'aide d'un circuit oscillant accordé sur le milieu de la bande de ce signal, d'autres bandes latérales non souhaitées, la presque totalité de l'énergie du signal modulé en amplitude d'impulsion étant transformée en la bande souhaitée d'ondes métriques.

8. Procédé selon les revendications 4 à 6, caractérisé par le fait que dans le canal le plus bas, du point de vue de la fréquence, du signal multiplexé en fréquence produit du côté émission on transmet, avec une fréquence se situant entre 0 et 300 kHz, trois signaux téléphoniques numériques.

9. Procédé selon les revendications 4 à 6, caractérisé par le fait que le signal modulé en amplitude d'impulsion du côté réception est produit dans la bande de fréquences de 93,03 à 99,63 MHz.

10. Procédé selon la revendication 4 à 6, caractérisé par le fait que du côté réception le signal modulé en amplitude d'impulsion est produit dans la plage de fréquences de 99,72 à 106,32 MHz.

# FIG1

TP TV1 TV2 TV3 TV4 MS1 TV1 TV2 TV3 TV4 MS2 TV1  MS99 TV1 TV2 TV3 TV4 TP

# FIG2

VK1     VK2     VK7     UK1     VK1

TV1 TV2 TV3 TV4 TV1 TV2 TV3 TV4   TV1 TV2 TV3 TV4       TV1 TV2 TV3 TV4 TV1 TV2

0 012 979

# FIG 3